# EUROPÄISCHE PATENTSCHRIFT

(11) **EP 1 277 648 B1**
(45) Veröffentlichungstag und Bekanntmachung des Hinweises auf die Patenterteilung: **29.09.2004**
(21) Anmeldenummer: 02015261.7
(22) Anmeldetag: 09.07.2002
(51) Int. Cl.: B62D 25/08, B62D 21/15

(54) **Vorderwagenstruktur eines Kraftfahrzeuges**
Motor vehicle front body structure
Structure avant de carrosserie de véhicule automobile

(30) Priorität: 19.07.2001 DE 10135197
(43) Veröffentlichungstag der Anmeldung: 22.01.2003
(73) Patentinhaber: Bayerische Motoren Werke Aktiengesellschaft, 80809 München (DE)
(72) Erfinder: Meinerling, Theodor, 85084 Reichertshofen (DE); Kuschfeldt, Sven, 81373 München (DE); Rill, Roland, 80807 München (DE)

(56) Entgegenhaltungen:
- EP-A- 0 810 144
- US-A- 5 992 921
- PATENT ABSTRACTS OF JAPAN vol. 2000, no. 04, 31. August 2000 (2000-08-31) -& JP 2000 016333 A (DAIHATSU MOTOR CO LTD), 18. Januar 2000 (2000-01-18)

## Beschreibung

Die Erfindung betrifft eine Vorderwagenstruktur einer Kraftfahrzeugkarosserie nach dem Oberbegriff des Anspruchs 1.

Eine solche Struktur ist aus der EP-A-0 810 144 bekannt.

Allgemein bekannt sind Vorderwagenstrukturen mit zwei Motorträgern, die an ihrem hinteren Ende über einen Querträger miteinander verbunden sind. Je ein Verbindungsträger stellt die Verbindung zwischen dem hinteren Bereich des Motorträgers zum Seitenschweller her.

Aufgabe der Erfindung ist es, eine Vorderwagenstruktur zu schaffen, die insbesondere die bei einem Aufprall auftretenden Kräfte optimal aufnimmt bzw. in geeignete Bereiche der restlichen Fahrzeugkarosserie einleitet.

Diese Aufgabe wird durch die Merkmale des Anspruchs 1 gelöst.

Eine Vorderwagenstruktur für eine Kraftfahrzeugkarosserie weist zwei Motorträger und je einen Verbindungsträger zwischen Motorträger und Seitenschweller im Bereich einer A-Säule auf. Ein Querträger verbindet die beiden stirnwandseitigen Endbereiche der Motorträger miteinander, und erstreckt sich seitlich jeweils bis zur A-Säule. Kerngedanke der Erfindung ist es, dass je ein diagonal nach unten verlaufender Anschlussträger den Knoten Querträger / A-Säule mit dem Seitenschweller verbindet. Dadurch wird ein zweiter Lastpfad zur Übertragung von Kräften vom Motorträger über den Querträger und den Anschlussträger in den Seitenschweller geschaffen. Die A-Säule ist aufgrund der zusätzlichen Abstützung mit dem Anschlussträger sehr steif mit dem Seitenschweller verbunden. Dadurch wird die Krafteinleitung in den Seitenschweller im A-Säulenbereich verbessert. Dies ist mit einem deutlich verbesserten Verhalten bei einem Crash verbunden, die A-Säule verlagert sich aufgrund des steifen Verbundes nicht so stark nach hinten.

Die A-Säule wird meist in Schalenbauweise durch eine Seitenwand innen und eine Seitenwand außen gebildet. Eine so gebildete A-Säule erstreckt sich in Fahrtrichtung häufig über eine relativ große Länge. Vorteilhafterweise erstreckt sich der Anschlussträger in Fahrzeuglängsrichtung gesehen nur vom vorderen zum hinteren Bereich der A-Säule. Er verläuft dann vom vorderen Ende der A-Säule, wo der Querträger in etwa mittlerer Höhe an die A-Säule angebunden ist, diagonal zum hinteren unteren Ende der A-Säule. Idealerweise verläuft der Anschlussträger dabei im Hohlraum zwischen der Seitenwand innen und der Seitenwand außen im Bereich der A-Säule. Damit ist der Anschlussträger unabhängig vom Design des Fahrzeugs und beansprucht keinen zusätzlichen Bauraum. Der Hohlraum zwischen Innen- und Außenschale ist nicht sichtbar und bei jeder Fahrzeugsäule in Schalenbauweise sowieso vorhanden.

Eine besonders einfache und damit kostengünstige Lösung ist ein Anschlussträger aus einem Hutprofil. Ein Hutprofil ist ein einfaches und zugleich wirkungsvolles Profil, das kostengünstig hergestellt werden kann, und die erforderlichen Anbindungsflansche bereits aufweist. Vorteilhafterweise liegt der Anschlussträger mit der offenen Seite des Hutprofils auf der Innenschale der A-Säule an. Er kann dort beispielsweise auch angeschweißt sein. Der Querträger kann an der Innenschale befestigt werden, und muss nicht bis zur Außenschale herausgeführt werden.

Seit vielen Jahren wird bestrebt, Fahrzeugkarosserien mit einem möglichst geringen Gewicht zu bauen, um die Fahrdynamik zu steigern und den Kraftstoffverbrauch zu senken. Aufgrund des einfachen Profils des Anschlussträgers kann dieser idealerweise auch aus einem höherfesten Stahl bestehen. Damit kann der Anschlussträger dünnwandiger und somit gewichtsoptimiert ausgeführt werden.

Aufgrund des relativ einfachen Profils des Querträgers kann dieser günstigerweise ebenfalls aus höherfestem Stahl bestehen. Ein derartiger Querträger kann dünnwandiger und damit leichter ausgeführt werden, als einer aus gewöhnlichem Stahlblech. Der Querträger ist vorteilhafterweise mit einem Flansch in der Ebene senkrecht zur Fahrtrichtung mit der A-Säule verschweißt. Dadurch werden die Schweißpunkte beanspruchungsgerecht auf Scherung beansprucht. Dies verringert das Risiko, dass die Schweißpunkte ausknöpfen.

Ein wichtiger Aspekt bei der crashoptimierten Auslegung eines Vorderwagens stellt die Berücksichtigung eines eindrehenden Vorderrades dar. Ein stark eindrehendes Vorderrad führt zu einer starken Stirnwandintrusion und damit zu einer Verkleinerung des vorderen Fußraums im Fahrgastraum. Daher wird versucht, das Eindrehen eines Vorderrades zu verhindern bzw. zumindest so gering als irgendmöglich zu halten. Vorteilhafterweise erstreckt sich der Seitenschweller dazu bis zum vorderen Radhaus. Im Gegensatz zum Stand der Technik bleibt der Querschnitt des Schwellers im wesentlichen gleich bis etwa zum vorderen Radhaus. Dadurch verbleibt nur ein relativ geringer Abstand zwischen Vorderrad und Seitenschweller und das vordere Ende des Seitenschwellers kann höhere Kräfte aufnehmen, als ein sich nach vorne hin verjüngender Schweller. Ein Teil der bei einem Aufprall auftretenden Kräfte kann direkt durch das Vorderrad in den Seitenschweller geleitet werden, ohne dass das Vorderrad stark zurückverlagert wird, da der Abstand Vorderrad zu Seitenschweller gering ist. Da sich das Vorderrad nicht so stark nach hinten verlagern kann, wird ein starkes Eindrehen des Vorderrads verhindert und die Stirnwandintrusion so verbessert.

Weitere vorteilhafte Ausgestaltungen sind Gegenstand weiterer Unteransprüchen.

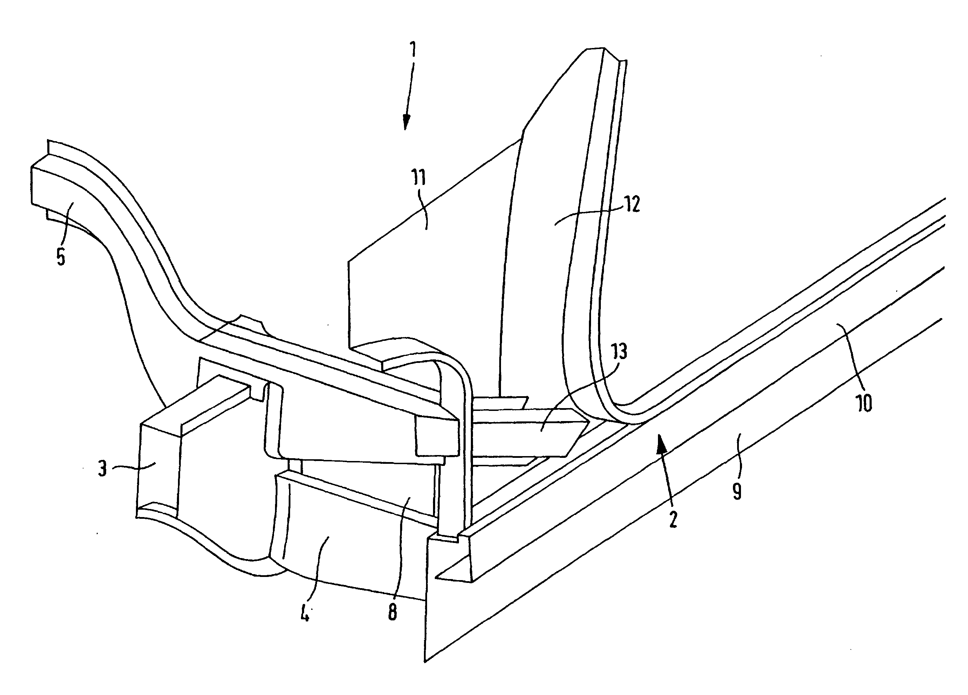

In der Zeichnung ist ein Ausführungsbeispiel der Erfindung dargestellt, das im folgenden näher beschrieben wird. Die einzige Figur zeigt in schematischer Darstellungsweise eine räumliche Ansicht der erfindungsgemäßen Vorderwagenstruktur.

In der Figur ist die linke Seite eines bezüglich der dargestellten Komponenten symmetrischen Vorderwagens 1 einer Kraftfahrzeugkarosserie dargestellt. Von dessen vorderen Ende bis in den Bereich eines Seitenschwellers 2 erstreckt sich beidseitig ein Motorträger 3, an dem das hier nicht gezeigte Vorderrad über eine Radaufhängung festgelegt ist. Der Motorträger 3 stützt sich über einen Verbindungsträger 4 am Seitenschweller 2 ab. Die beiden fahrgastraumseitigen Enden der Motorträger 3 sind über einen Querträger 5 aus höherfestem Stahlblech miteinander verbunden, der oberhalb der Verbindungsträger 4 verläuft. Der Querträger 5 erstreckt sich seitlich jeweils bis zu einer A-Säule 6, mit der er jeweils verschweißt ist. Am Querträger 5 und den Verbindungsträgern 4 anliegend verläuft eine hier nur abschnittsweise dargestellte Stirnwand 8 zwischen den beiden A-Säulen 6. Sie trennt den Motorraum vom Fahrgastraum ab.

Die in Fahrzeugquerrichtung gesehen sehr breite A-Säule 6 und der Seitenschweller 2 sind jeweils Bestandteil einer inneren Seitenwand 9 und einer nicht dargestellten äußeren Seitenwand, die miteinander verbunden die komplette Seitenstruktur inklusive A-Säule 6 und Seitenschweller 2 bilden. Der Seitenschweller 2 erstreckt sich mit gleichbleibendem Querschnitt bis zum vorderen Radhaus. Der Seitenschweller 2 ist mit einer Längsverstärkung 10 ausgesteift, die auf der Außenseite der inneren Seitenwand 9 aufgebracht ist und sich über die ganze Länge des Seitenschwellers 2 erstreckt.

Die innere Seitenwand 9 besteht aus einem vorderen und einem hinteren miteinander verbundenen Abschnitt 11 und 12. Der Stoß zwischen vorderem und hinteren Abschnitt 11 und 12 liegt vertikal etwa in der Mitte der A-Säule 6. Zwischen innerer 9 und äußerer Seitenwand ist auf der inneren Seitenwand 9 ein erfindungsgemäßer Anschlussträger 13 aufgebracht, der vom Knoten A-Säule 6 / Querträger 5 diagonal nach unten zum Seitenschweller 2 innerhalb der A-Säule 6 verläuft. Der Anschlussträger 13 besteht aus einem einfachen Hutprofil aus höherfestem Stahlblech, das mit der offenen Seite auf der inneren Seitenwand 9 angeschweißt ist.

Bei einem Aufprall überträgt sich die eingeleitete Energie vor allem über die Vorderräder und den Motorträger 3. Die in die Vorderräder eingeleitete Energie wird aufgrund der bis zum Radhaus nach vorne reichenden Seitenschweller 2 im wesentlichen direkt in den Seitenschweller 2 eingeleitet, ohne dass es zu einer größeren Rückverlagerung des Vorderrades kommt. Dies reduziert die Gefahr eines eindrehenden Vorderrades.

Die in den Motorträger 3 eingeleitete Crashenergie wird teils über den Verbindungsträger 4, teils über den Querträger 5 und den Anschlussträger 13 seitlich in den Seitenschweller 2 abgeführt. Aufgrund des Anschlussträgers 13 entsteht kein Biegemoment im Fuß der A-Säule 6. Der Querträger 5 ist in der Ebene senkrecht zur Fahrtrichtung mit der A-Säule 6 verschweißt, sodass die Schweißpunkte beanspruchungsgerecht auf Scherung belastet werden. Dadurch können die Schweißpunkte nicht aufknöpfen.

Durch die beiden Lastpfade entsteht eine sehr steife Struktur, so dass auch hohe Kräfte, wie sie beispielsweise bei einem Frontalaufprall auftreten, nicht zu einer starken Rückverlagerung der A-Säule 6 führen. Zusätzlich wird durch den geringen Abstand zwischen Seitenschweller 2 und Vorderrad und den konstanten Querschnitt des Seitenschwellers 2 bis zum vorderen Ende die Gefahr eines eindrehenden Vorderrades und damit einer gefährlichen Intrusion in die Stirnwand 8 reduziert.

## Patentansprüche

1. Vorderwagenstruktur (1) einer Kraftfahrzeugkarosserie, mit zwei Motorträgern (3) und je einem Verbindungsträger (4) zwischen Motorträger (3) und Seitenschweller (2) im Bereich einer A-Säule (6), sowie einem Querträger (5) der die beiden stirnwandseitigen Endbereiche der Motorträger (3) miteinander verbindet, und der sich seitlich jeweils bis zur A-Säule (6) erstreckt, **dadurch gekennzeichnet, dass** je ein diagonal nach unten verlaufender Anschlussträger (**13**) den Knoten Querträger (**5**) / A-Säule (**6**) mit dem Seitenschweller (**2**) verbindet.

2. Vorderwagenstruktur nach Anspruch 1, **dadurch gekennzeichnet, dass** der Anschlussträger (**13**) in Fahrzeuglängsrichtung gesehen sich nur vom vorderen zum hinteren Bereich der A-Säule (**6**) erstreckt.

3. Vorderwagenstruktur nach Anspruch 2, **dadurch gekennzeichnet, dass** der Anschlussträger (**13**) zwischen einer Seitenwand innen (**9**) und einer Seitenwand außen verläuft, die zusammen in Schalenbauweise unter anderem die A-Säule (6) bilden.

4. Vorderwagenstruktur nach einem der vorhergehenden Ansprüche, **dadurch gekennzeichnet, dass** der Anschlussträger (**13**) aus einem Hutprofil besteht.

5. Vorderwagenstruktur nach Anspruch 4, **dadurch gekennzeichnet, dass** der Anschlussträger (**13**) mit der offenen Seite des Hutprofils auf der Innenschale (**9**) der A-Säule (**6**) anliegt.

6. Vorderwagenstruktur nach Anspruch 5, **dadurch gekennzeichnet, dass** der Anschlussträger (**13**) an der A-Säule (**6**) angeschweißt ist.

7. Vorderwagenstruktur nach einem der vorhergehenden Ansprüche, **dadurch gekennzeichnet, dass** der Anschlussträger (**13**) aus höherfestem Stahl besteht.

8. Vorderwagenstruktur nach einem der vorhergehenden Ansprüche, **dadurch gekennzeichnet, dass** der Querträger (**5**) aus höherfestem Stahl besteht.

9. Vorderwagenstruktur nach einem der vorhergehenden Ansprüche, **dadurch gekennzeichnet, dass** der Querträger (**5**) mit einem Flansch in der Ebene senkrecht zur Fahrtrichtung mit der A-Säule (**6**) verschweißt ist.

10. Vorderwagenstruktur nach einem der vorhergehenden Ansprüche, **dadurch gekennzeichnet, dass** der Seitenschweller (**2**) sich mit zumindest im wesentlichen gleichbleibendem Querschnitt bis zum vorderen Radhaus erstreckt.

## Claims

1. A car-front structure (1) of a vehicle body, comprising two engine bearers (3), a connecting bearer (4) between each engine bearer (3) and side member (2) in the neighbourhood of an A-column (6), and a transverse bearer (5) which connects the two end-wall end regions of the engine bearer (3) to one another and extends sideways as far as the respective A-column (6), **characterised in that** a downwardly sloping connecting bearer (13) connects the junction between the transverse bearer (5) and A-column (6) to the respective side member (2).

2. A car-front structure according to claim 1, **characterised in that** the connecting bearer (13), considered in the longitudinal direction of the vehicle, extends only from the front to the rear region of the A-column (6).

3. A car-front structure according to claim 2, **characterised in that** the connecting bearer (1) extends between an inner side wall (9) and an outer side wall which together form the A-column (6) inter alia in a shell construction.

4. A car-front structure according to any of the preceding claims, **characterised in that** the connecting bearer (13) comprises a cap profile.

5. A car-front structure according to claim 4, **characterised in that** the open side of the cap profile of the connecting bearer (13) abuts the inner shell (9) of the A-column (6).

6. A car-front structure according to claim 5, **characterised in that** the connecting bearer (13) is welded to the A-column (6).

7. A car-front structure according to any of the preceding claims, **characterised in that** the connecting bearer (13) is made of high-strength steel.

8. A car-front structure according to any of the preceding claims, **characterised in that** the transverse bearer (5) is made of high-strength steel.

9. A car-front structure according to any of the preceding claims, **characterised in that** a flange of the transverse bearer (5) is connected to the A-column (6) in the plane at right angles to the direction of travel.

10. A car-front structure according to any of the preceding claims, **characterised in that** the side member (2) has an at least substantially uniform cross-section extending to the front wheel house.

## Revendications

1. Structure avant de carrosserie (1) d'une carrosserie de véhicule automobile comportant deux supports de moteur (3) et chacun un support de liaison (4) entre le support de moteur (3) et le bas de caisse latéral (2) dans la zone d'une colonne A (6), ainsi qu'un support transversal (5) qui relie ensemble les deux zones d'extrémité côté paroi frontale du support de moteur (3) et qui s'étend latéralement à chaque fois jusqu'à la colonne A (6),
**caractérisée en ce qu'**
à chaque fois un support de raccordement (13) s'étendant vers le bas en diagonal relie le noeud support transversal (5)/colonne A (6) au bas de caisse latéral (2).

2. Structure avant de carrosserie selon la revendication 1,
**caractérisée en ce que**
le support de raccordement (13), vu en direction longitudinale du véhicule automobile, ne s'étend que de la zone avant à la zone arrière de la colonne A (6).

3. Structure avant de carrosserie selon la revendication 2,
**caractérisée en ce que**
le support de raccordement (13) s'étend entre une paroi latérale intérieure (9) et une paroi latérale extérieure qui, ensemble, en tant que coque, forment, entre autres, la colonne A (6).

4. Structure avant de carrosserie selon l'une quelconque des revendications précédentes,
**caractérisée en ce que**
le support de raccordement (13) est constitué d'un profilé en chape.

5. Structure avant de carrosserie selon la revendication 4,
**caractérisée en ce que**
le support de raccordement (13) repose contre la coque intérieure (9) de la colonne A (6) par le côté ouvert du profilé en chape.

6. Structure avant de carrosserie selon la revendication 5,
**caractérisée en ce que**
le support de raccordement (13) est soudé à la colonne A (6).

7. Structure avant de carrosserie selon l'une quelconque des revendications précédentes,
**caractérisée en ce que**
le support de raccordement (13) est constitué d'acier à haute limite élastique.

8. Structure avant de carrosserie selon l'une quelconque des revendications précédentes,
**caractérisée en ce que**
le support transversal (5) se constitue d'acier à haute limite élastique.

9. Structure avant de carrosserie selon l'une quelconque des revendications précédentes,
**caractérisée en ce que**
le support transversal (5) est soudé par un flasque dans le plan perpendiculaire à la direction d'avancement du véhicule avec la colonne A (6).

10. Structure avant de carrosserie selon l'une quelconque des revendications précédentes,
**caractérisée en ce que**
le bas de caisse latéral (2) s'étend avec une section demeurant au moins pour l'essentiel constante jusqu'au passage de roue avant.
